# EUROPÄISCHE PATENTSCHRIFT

(11) **EP 4 202 248 B1**
(45) Veröffentlichungstag und Bekanntmachung des Hinweises auf die Patenterteilung: **16.07.2025**
(21) Anmeldenummer: 22214123.6
(22) Anmeldetag: 16.12.2022
(51) Int. Cl.: F16D 3/68, G01L 3/00, G01P 3/00

(54) **VORRICHTUNG ZUR ÜBERTRAGUNG VON DREHMOMENTEN**
DEVICE FOR TRANSMITTING TORQUES
DISPOSITIF DE TRANSMISSION DE COUPLE

(30) Priorität: 23.12.2021 DE 102021134627; 04.11.2022 DE 202022106221 U; 15.11.2022 DE 102022130242
(43) Veröffentlichungstag der Anmeldung: 28.06.2023
(73) Patentinhaber: KTR Systems GmbH, 48432 Rheine (DE)
(72) Erfinder: Kösters, Jürgen, 48366 Laer (DE); Daszkowski, Stefan, 48282 Emsdetten (DE)
(74) Vertreter: Roche, von Westernhagen & Ehresmann

(56) Entgegenhaltungen:
- EP-A1- 3 885 597
- DE-A1- 102012 023 201
- DE-U1- 29 813 731

## Beschreibung

Die Erfindung betrifft eine Vorrichtung zur Übertragung von Drehmomenten nach Ansprüche 1 und 15.

Derartige Vorrichtungen zur Übertragung von Drehmomenten unter Zwischenschaltung gummielastischer Elemente von einem Antrieb zu einem Abtrieb werden gemeinhin auch als Kupplungen bezeichnet. Dokument DE29813731 U1 offenbart eine Vorrichtung zur Übertragung von Drehmomenten unter Zwischenschaltung gummielastischer Elemente die eine mitrotierende Einrichtung zur Messung aufweist.

Die Vorrichtung weist gummielastische Elemente auf, die insbesondere eine Schwingungsdämpfung bewirken kann. Die gummielastischen Elemente können auch für einen Ausgleich eines Axialversatzes und/oder eines Radialversatzes und/oder eines Winkelversatzes zwischen Antrieb und Abtrieb sorgen und auf diese Weise z. B. Montage- oder Fertigungstoleranzen auszugleichen.

Von der Anmelderin werden seit mehreren Jahrzehnten Vorrichtungen dieser Art entwickelt und vertrieben. Die Anmelderin gehört zu den führenden Unternehmen auf diesem Gebiet der Technik weltweit.

Beispiele für Kupplungen dieser Art sind die sogenannten "ROTEX"-Kupplungen der Anmelderin.

Bei der "ROTEX"-Kupplung der Anmelderin handelt es sich um eine drehelastische Klauenkupplung mit zwei identischen oder nahezu identischen Kupplungshälften, zwischen denen ein Elastomerkranz mit einer Vielzahl gummielastischer Elemente angeordnet ist.

Diese Kupplung ermöglicht bei einem geringen Gewicht und geringen Massenträgheitsmomenten die Übertragung auch hoher Drehmomente. Die bekannte Kupplung ist axial steckbar und damit einfach montierbar. Darüber hinaus ist die Wellenkupplung durchschlagsicher ausgebildet.

Ausgehend von der eingangs beschriebenen, bekannt gewordenen Vorrichtung zur Übertragung von Drehmomenten des Standes der Technik besteht die Aufgabe der Erfindung darin, die bekannte Vorrichtung derartig weiterzubilden, dass die Vorrichtung vielseitiger einsetzbar ist.

Die Erfindung löst diese Aufgabe mit den Merkmalen des Anspruches 1.

Das Prinzip der Erfindung besteht vorliegend im Wesentlichen darin, an der Vorrichtung ein mitdrehendes Kommunikationsmodul anzuordnen. Das Kommunikationsmodul wird von der ortsfest angeordneten Spannungsversorgungseinheit induktiv mit Betriebsspannung versorgt. Insbesondere wird die gesamte Einrichtung, die eine Messung des übertragenen Drehmomentes vornimmt und/oder eine als Bestandteil der Einrichtung ausgebildete, mitrotierende Messelektronik gleichermaßen induktiv mit Betriebsspannung versorgt.

Das Kommunikationsmodul ist dazu ausgebildet, Informationen zu übermitteln. Insbesondere können Informationen an ein ortsfest angeordnetes Gegenkommunikationsmodul als Funksignal, also drahtlos, übermittelt werden.

Als ortsfestes Gegenkommunikationsmodul werden ortsfest montierte Gegenkommunikationsmodule, mit einem z. B. fest angeordneten Empfänger verstanden, die z. B. an der Spannungsversorgungseinheit angeordnet sein können oder fest relativ zu der Spannungsversorgungseinheit angeordnet werden können. Von der Bezeichnung ortsfestes Gegenkommunikationsmodul in Sinne der Erfindung sind aber auch beispielsweise mobile Endgeräte wie Handys, Smartphones, Laptops, Tablets, PDAs, Smartwatches, Computer oder dergleichen Geräte verstanden, die zwar mobil ausgebildet sind, aber nicht mit der Vorrichtung mitrotieren.

Gemäß der Erfindung ist das Kommunikationsmodul dazu ausgebildet, Informationen zu übermitteln. Die Informationen können Informationen über das übertragende Drehmoment umfassen und/oder Informationen über die Drehzahl der Vorrichtung. Die übermittelten Informationen können aber auch andere Parameter oder Messwerte umfassen oder auf diese bezogen sein oder mit diesen zusammenhängen, die einen Zustand der Vorrichtung betreffen oder auf einen Zustand der Vorrichtung bezogen sind. Es können also z. B. aktuelle Messwerte, wie das aktuelle übertragene Drehmoment oder die aktuelle Drehzahl der Vorrichtung oder Mittelwerte oder Durchschnittswerte oder Historienverläufe etc. übermittelt werden.

Die Kommunikation zwischen dem Kommunikationsmodul und dem Gegenkommunikationsmodul kann unidirektional, aber bedarfsweise aus bidirektional ausgebildet sein. So kann über die von dem Kommunikationsmodul und dem Gegenkommunikationsmodul bereitgestellte Kommunikationsverbindung beispielsweise auch eine Konfiguration der Einrichtung bzw. der Messelektronik, soweit vorhanden, vorgenommen werden. Auch kann über diese Verbindung. z. B. ein bei Ausführungsbeispielen der Erfindung vorgesehenes Anzeigeelemente konfiguriert werden.

Die Funkverbindung kann nach einem proprietären oder allgemein zugänglichen Standard ausgebildet sein. In Frage kommen Standards wie Bluetooth, Bluetooth LE; WLAN, NFC, oder andere geeignete Protokolle.

Die erfindungsgemäße Vorrichtung umfasst gummielastische Elemente, die zur Dämpfung vorgesehen sind. Als gummielastische Elmente im Sinne der Patentanmeldung werden insbesondere federelastische Elemente oder rückstellelastische Elemente, sowie elastische Elemente jeglicher Art angesehen, unabhängig von der Wahl des Materials des Elementes und unabhängig von der Konstruktion des Elementes.

Gemäß einer vorteilhaften Ausgestaltung der Erfindung ist das Kommunikationsmodul zur Bereitstellung einer Funksignalverbindung nach dem Bluetooth-Protokoll ausgebildet. Dies erlaubt einen Rückgriff auf herkömmliche Endgeräte, die Bluetooth-Empfänger umfassen. So kann beispielsweise nahezu jedes Smartphone verwendet werden, dies vorzugsweise unter der Voraussetzung, dass eine eigene, proprietäre App, gegebenenfalls mit einer Zugriffskontrolleinrichtung, auf das Smartphone heruntergeladen wird.

Gemäß einer weiteren vorteilhaften Ausgestaltung der Erfindung ist das Kommunikationsmodul zur Bereitstellung einer Funksignalverbindung nach dem Bluetooth LE (low energy)-Protokoll ausgebildet. Dies ermöglicht eine besonders energiesparende Signalübertragung.

Gemäß einer weiteren vorteilhaften Ausgestaltung der Erfindung umfasst die Einrichtung ein mitrotierendes Anzeigeelement, mit dem Informationen über das übertragene Drehmoment und/oder Informationen über die Drehzahl der Vorrichtung und/oder andere, auf einen Zustand der Vorrichtung bezogene und von der Einrichtung erfasste Parameter oder Messwerte anzeigbar sind. Diese Ausgestaltung der Erfindung ermöglicht eine besonders vorteilhafte visuelle Anzeige.

Gemäß einer weiteren vorteilhaften Ausgestaltung der Erfindung erfolgt eine Ansteuerung des Anzeigeelementes unter Berücksichtigung der Drehzahl der Vorrichtung. Diese Ausgestaltung der Erfindung ermöglicht eine besonders komfortable Bildanzeige.

Gemäß einer vorteilhaften Ausgestaltung der Erfindung ist das Anzeigeelement nach Art einer Stroboskop-Anzeige ausgebildet ist. Dies ermöglicht einen Rückgriff auf herkömmliche Bauelemente.

Gemäß einer vorteilhaften Ausgestaltung der Erfindung weist die Einrichtung eine Steuerung zur Ansteuerung des Anzeigeelementes auf. Dies ermöglicht eine optimierte Betriebsweise.

Gemäß einer vorteilhaften Ausgestaltung der Erfindung umfasst die Einrichtung eine Messelektronik, mit der eine Drehzahl der Vorrichtung messbar ist. Dies ermöglicht eine einfache Konstruktion der erfindungsgemäßen Einrichtung.

Gemäß einer vorteilhaften Ausgestaltung der Erfindung umfasst die Einrichtung wenigstens einen Empfänger oder Sender und die ortsfest angeordnete Spannungsversorgungseinheit wenigstens einen Sender oder Empfänger. Dies ermöglicht eine besonders sichere Betriebsweise.

Gemäß einer vorteilhaften Ausgestaltung der Erfindung bildet der Sender und der Empfänger zwischen sich eine Signalstrecke, z.B. eine optische Signalstrecke oder eine elektrische Signalstrecke oder eine magnetische Signalstrecke oder eine elektro-magnetische Signalstrecke, aus. Dies erlaubt einen Rückgriff auf herkömmliche Bauelemente.

Gemäß einer vorteilhaften Ausgestaltung der Erfindung ist mittels des Senders und des Empfängers zumindest eine Drehposition der Vorrichtung feststellbar oder überprüfbar oder triggerbar. Dies ermöglicht eine besonders einfache Konstruktion und eine sichere Betriebsweise.

Gemäß einer vorteilhaften Ausgestaltung der Erfindung sind wenigstens zwei Sender oder wenigstens zwei Empfänger vorgesehen. Dies ermöglicht eine einfache Feststellung eines Drehsinns der Vorrichtung.

Gemäß einer vorteilhaften Ausgestaltung der Erfindung ist mittels der wenigstens zwei Sender oder mittels der wenigstens zwei Empfänger ein Drehsinn der Vorrichtung feststellbar. Dies ermöglicht eine optimierte Anzeige in Abhängigkeit des Drehsinns.

Gemäß einer vorteilhaften Ausgestaltung der Erfindung steuert die Einrichtung das Anzeigeelement unter Berücksichtigung eines ermittelten Drehsinnes der Vorrichtung an. Dies ermöglicht eine einfach lesbare optimierte Anzeige.

Gemäß einer weiteren vorteilhaften Ausgestaltung der Erfindung umfasst die Vorrichtung wenigstens einen tordierbaren Abschnitt.

Gemäß einer weiteren vorteilhaften Ausgestaltung der Erfindung weist die Vorrichtung mit den gummielastischen Elementen kooperierende Kupplungskörper auf, die an einer Nabe angeordnet sind.

Gemäß einer weiteren vorteilhaften Ausgestaltung der Erfindung ist der tordierbare Abschnitt von der Nabe bereitgestellt.

Gemäß einer weiteren vorteilhaften Ausgestaltung der Erfindung umfasst die Vorrichtung einen antriebsseitigen Befestigungsbereich und einen abtriebsseitigen Befestigungsbereich, deren Abstand voneinander eine axiale Baulänge der Vorrichtung definiert, wobei die Vorrichtung in ihren baulichen Abmessungen den Abmessungen einer herkömmlichen Kupplung oder einer Standard-Kupplung angenähert ist oder diesen entspricht, wobei die Vorrichtung mit der herkömmlichen Kupplung austauschbar ausgebildet ist.

Gemäß einer weiteren vorteilhaften Ausgestaltung der Erfindung ist, der tordierbare Abschnitt von einem radialen Rücksprung der Nabe gebildet. Diese Ausgestaltung ermöglicht eine einfache Konstruktion der erfindungsgemäßen Vorrichtung sowie eine sichere Unterbringung von Dehnungsmessstreifen und/oder gegebenenfalls von anderen Teilabschnitten oder Elementen der Einrichtung.

Gemäß einer weiteren vorteilhaften Ausgestaltung der Erfindung weist die Einrichtung Dehnungsmessstreifen (DMS) auf. Diese Ausgestaltung ermöglicht eine einfache Konstruktion und einen Rückgriff auf kommerziell erhältliche Bauteile und Elemente.

Gemäß einer weiteren vorteilhaften Ausgestaltung der Erfindung fungiert der Abschnitt als Träger für die Dehnungsmessstreifen. Diese Ausgestaltung ermöglicht eine einfache Konstruktion und eine besonders vorteilhafte und sichere Messung des übertragenen Drehmomentes.

Gemäß einer weiteren vorteilhaften Ausgestaltung der Erfindung ist, der Abschnitt einstückig-stoffschlüssig mit der Nabe verbunden. Diese Ausgestaltung der Erfindung ermöglicht eine besonders kompakte Bauform und eine einfache Fertigung der erfindungsgemäßen Vorrichtung.

Gemäß einer weiteren vorteilhaften Ausgestaltung der Erfindung ist der Abschnitt durch ein Abdrehen der Nabe geformt. Diese Ausgestaltung ermöglicht eine besonders einfache Konstruktion.

Gemäß einer weiteren vorteilhaften Ausgestaltung der Erfindung ist die Einrichtung zur Überwachung und/oder zur Steuerung einer Maschine ausgebildet. Diese Ausführungsform der Erfindung ermöglicht einen Einsatz der Vorrichtung in neuen Anwendungsfeldern und Bereichen.

Gemäß einer weiteren vorteilhaften Ausgestaltung der Erfindung generiert die Einrichtung bei Überschreitung eines Schwell-Drehmomentes ein Warnsignal. Diese Ausgestaltung ermöglicht eine besonders sichere Betriebsweise einer Maschine oder Anlage, da z. B. damit auch eine Notabschaltung vorgenommen werden kann oder Wartungsarbeiten veranlasst werden können.

Gemäß einer weiteren vorteilhaften Ausgestaltung der Erfindung umfasst die Einrichtung einen ringförmigen Körper, der mit der Vorrichtung mitdrehend ausgebildet ist. Diese Ausführungsform ermöglicht eine besonders einfache Konstruktion einer erfindungsgemäßen Einrichtung.

Gemäß einer weiteren vorteilhaften Ausgestaltung der Erfindung umfasst die Einrichtung einen das Anzeigeelement tragenden ringförmigen Körper, der mit der Vorrichtung mitdrehend ausgebildet ist.

Gemäß einer weiteren vorteilhaften Ausgestaltung der Erfindung umfasst der Ringkörper Werkstoffbereiche aus Kunststoff. Diese Ausgestaltung der Erfindung ermöglicht eine besonders einfache Bauweise einer erfindungsgemäßen Vorrichtung.

Gemäß einer weiteren vorteilhaften Ausgestaltung der Erfindung steht der Ringkörper über die Nabe in Radialrichtung vor, wobei das Anzeigeelement an dem Überstand angeordnet ist. Diese Ausführungsform der Erfindung ermöglicht eine besonders einfache Bauweise und eine besonders einfache und komfortable Anordnung einer Anzeigevorrichtung.

Gemäß einer weiteren vorteilhaften Ausgestaltung der Erfindung umfasst die Einrichtung einen Messbereich zu messender, von der Vorrichtung übertragender Drehmomente zwischen 10 Nm und 20000 Nm, insbesondere zwischen 100 Nm und 10000 Nm. Diese Ausführungsform der Erfindung ermöglicht einen besonders breiten Einsatzbereich und einen Einsatz in unterschiedlichen Anwendungsfeldern.

Gemäß einer weiteren vorteilhaften Ausgestaltung der Erfindung ist die Einrichtung mit der Vorrichtung mitdrehend ausgebildet, und kooperiert mit einer ortsfest angeordneten Einheit zur induktiven Versorgung der Einrichtung mit Betriebsspannung. Diese Ausgestaltung der Erfindung ermöglicht eine besonders einfache Konstruktion und einen Rückgriff auf kommerzielle herkömmliche Bauteile und Elemente.

Gemäß einer weiteren vorteilhaften Ausgestaltung der Erfindung weist die Einrichtung ein Kommunikationsmodul auf, mit dem Informationen über ein gemessenes Drehmoment mittels Funksignalen an eine ortsfest ausgebildete Signalempfangseinheit übermittelbar sind. Diese Ausgestaltung der Erfindung ermöglicht eine besonders einfache Konstruktion und eine Verarbeitung von Messwerten außerhalb der Einrichtung, z. B. an ortsfest angeordneten Recheneinheiten.

Gemäß einer weiteren vorteilhaften Ausgestaltung der Erfindung weist die Einrichtung ein Kommunikationsmodul auf, mit dem Informationen über ein gemessenes Drehmoment entlang einer Funkstrecke an eine insbesondere ortsfest ausgebildete Signalempfangseinheit oder an ein insbesondere Bluetooth-fähiges mobiles Endgerät übermittelbar sind.

Gemäß einer weiteren vorteilhaften Ausgestaltung der Erfindung weist die Einrichtung ein mitdrehendes Anzeigeelement zur Anzeige von Informationen, zum Beispiel von Informationen über ein gemessenes Drehmoment, auf. Diese Ausgestaltung der Erfindung ermöglicht eine besonders sichere Betriebsweise.

Gemäß einer weiteren vorteilhaften Ausgestaltung der Erfindung ist die Vorrichtung als Klauenkupplung ausgebildet. Diese Ausführungsform der Erfindung ermöglicht einen Rückgriff auf an sich bekannte kommerziell erhältliche Bauteile oder Elemente.

Von der Erfindung sind auch Ausführungsbeispiele umfasst, bei denen die Vorrichtung nicht als Klauenkupplung ausgebildet ist, sondern eine andere Art von Kupplung ausbildet. Schließlich sind von der Erfindung Vorrichtungen umfasst, bei denen Klauen in Axialrichtung und/ oder in Radialrichtung einander überlappen. Von der Erfindung sind auch Vorrichtungen umfasst, die ohne Klauen auskommen und bei denen die Flächen, die die gummielastischen Körper kontaktieren, von anderen Werkzeugbereichen einer Nabe bereitgestellt sind, also von Klauen.

Die Erfindung bezieht sich alternativ beispielsweise auch auf Stahllamellenkupplungen oder Balgkupplungen. Hier können die rückstellelastischen oder federelastischen Elemente zum Beispiel von Lamellen oder von einem Balg bereitgestellt sein.

Die Erfindung betrifft des Weiteren ein Verfahren nach Anspruch 14.

Die Aufgabe der vorliegenden Erfindung besteht darin, ein Verfahren anzugeben, mit dem in besonders vorteilhafterweise Informationen über einen Betrieb der Vorrichtung erhalten werden können.

Die Erfindung löst die Aufgabe mit den Merkmalen des Anspruches 14.

Die Erfindung versteht sich am besten im Hinblick auf die obigen Ausführungen zu den vorrichtungsbezogenen Ansprüchen, wobei diese Bemerkungen auch für das Verständnis der Merkmale des Anspruches 14 und für die Erläuterung der technischen Lehre nach Anspruch 14 analog Geltung finden.

Gemäß einer vorteilhaften Ausgestaltung der Erfindung umfasst der Schritt c) eine Übermittlung von Information entlang einer Funkstrecke gemäß dem Bluetooth-Protokoll, insbesondere gemäß dem Bluetooth LE (low energy)-Protokoll.

Die Erfindung bezieht sich gemäß einem weiteren Aspekt auf eine Vorrichtung nach Anspruch 15.

Die Vorrichtung nach Anspruch 15 entspricht der Vorrichtung nach Anspruch 1, mit dem Unterschied, dass die Einrichtung nicht induktiv, sondern von einer mit der Vorrichtung mit drehenden oder mit rotierenden Batterie, also einem Akku, mit Betriebsspannung, versorgt wird.

Der Akku kann so dimensioniert und ausgelegt sein, dass er für eine vorgegebene typische Betriebsdauer, von zum Beispiel mehreren Wochen, Monaten oder Jahren, ausgelegt ist. Der Akku kann insbesondere austauschbar und wieder aufladbar ausgebildet sein.

Die Vorrichtung nach Anspruch 15, kann erfindungsgemäß mit einzelnen oder mehreren Merkmalen der zuvor beschriebenen Vorrichtung nach einem der Ansprüche 1 bis 13 kombiniert werden, wobei zur Vermeidung von Wiederholungen auf die Ausführungen zu der Vorrichtung nach Anspruch 1 bis 13 verwiesen wird.

Weitere Vorteile der Erfindung ergeben sich aus den nicht zitierten Unteransprüchen sowie anhand der nachfolgenden Beschreibung der in den Zeichnungen dargestellten Ausführungsbeispiele. Darin zeigen:
- Fig. 1: in einer teilgeschnitten schematischen Ansicht eine Vorrichtung des Standes der Technik im Längsschnitt,
- Fig. 2: in einer Darstellung gemäß Fig. 1 ein erstes Ausführungsbeispiel einer erfindungsgemäßen Vorrichtung, wobei die Vorrichtung gemäß Fig. 1 durch die Vorrichtung gemäß Fig. 2 in Folge eines Austausches ersetzbar ist,
- Fig. 3: in einer perspektivischen, schematischen, teilgeschnittenen, abgebrochenen Darstellung eine Explosionsdarstellung der erfindungsgemäßen Vorrichtung gemäß Fig. 2 unter Darstellung beider Kupplungshälften und eines Elastomerkranzes,
- Fig. 4: in einer schematischen, teilgeschnittenen Ansicht eine Kupplungshälfte eines Ausführungsbeispiels einer erfindungsgemäßen Vorrichtung mit Nabe und tordierbarem Abschnitt,
- Fig. 4a: Die Kupplungshälfte der Fig. 4 in einer perspektivischen schematischen Ansicht,
- Fig. 5: die Vorrichtung der Fig. 4 in einer Darstellung gemäß Fig. 4 unter zusätzlicher Andeutung von Dehnungsmessstreifen,
- Fig. 6: die Vorrichtung der Fig. 4 unter Darstellung eines zusätzlichen Anbauteils,
- Fig. 7: ein Ausführungsbeispiel einer erfindungsgemäßen Vorrichtung in einer Darstellung ähnlich der Fig. 4, wobei zusätzlich ein ringförmiger Körper gezeigt ist, der eine Einrichtung zur Messung eines übertragenen Drehmomentes aufweist,
- Fig. 7a: in einer teilgeschnittenen schematischen Ansicht den Ringkörper und die Einrichtung zur Messung eines übertragenen Drehmomentes der Fig. 7 in Einzeldarstellung etwa gemäß Ansichtspfeil VIIa in Fig. 7 unter zusätzlicher Andeutung des geschnitten dargestellten tordierbaren Abschnittes und in einer gegenüber Fig. 7 geänderten Anordnung der Anzeige und der elektronischen Bauelemente,

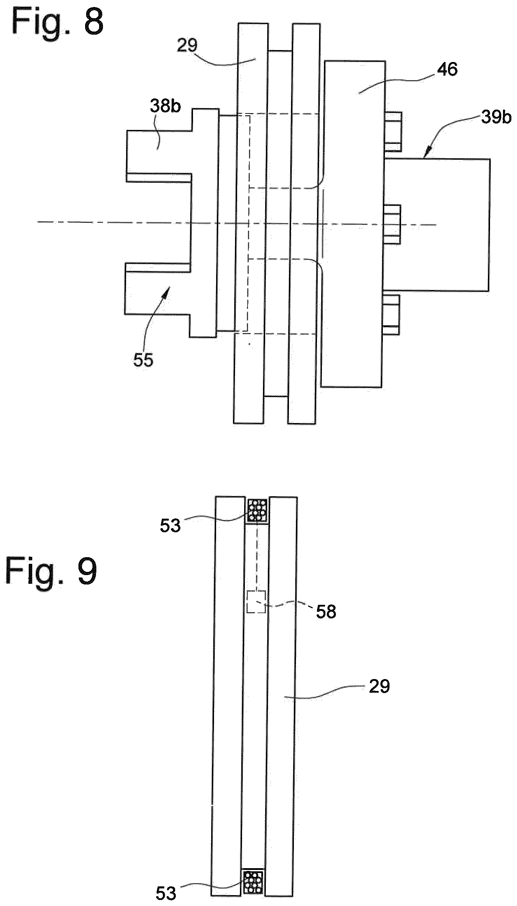

- Fig. 8: ein weiteres Ausführungsbeispiel einer erfindungsgemäßen Vorrichtung in einer Darstellung ähnlich der Fig. 7, wobei zusätzlich eine Sekundärspule der Einrichtung zur Messung eines Drehmoments dargestellt ist,
- Fig. 9: den Ringkörper der Fig. 8 unter Andeutung der Sekundärspule,
- Fig. 10: ein schematisches blockschaltbildartiges Prinzipschaltbild eines Ausführungsbeispiels einer erfindungsgemäßen Vorrichtung unter Darstellung des ringförmigen Körpers mit der Einrichtung zur Messung des übertragenen Drehmomentes, einer als Pick-up ausgebildeten Spannungsversorgungseinheit, und eines Empfangsgerätes zum Empfangen von Messsignalen,
- Fig. 11: in einer Darstellung vergleichbar der Fig. 10 in Alleinstellung den Ringkörper eines Ausführungsbeispiels einer erfindungsgemäßen Vorrichtung mit einer Einrichtung zur Messung des übertragenen Drehmomentes unter Darstellung einer Anzeigeeinrichtung, die von einer Mehrzahl von LED's bereitgestellt wird,
- Fig. 12: ein weiteres Ausführungsbeispiel einer erfindungsgemäßen Kupplungshälfte in einer Darstellung vergleichbar mit der Darstellung der Figur 7, wobei hier ein geändertes Adapterstück Anwendung findet, und
- Fig. 13: ein weiteres Ausführungsbeispiel einer erfindungsgemäßen Kupplungshälfte in einer Darstellung vergleichbar mit dem Ausführungsbeispiel der Figur 6, wobei ein Ringkörper vorgesehen ist, der einen geringeren Außendurchmesser aufweist als der Ringkörper des Ausführungsbeispiels der Figur 7, und wobei die Anzeigefelder geändert orientiert sind.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

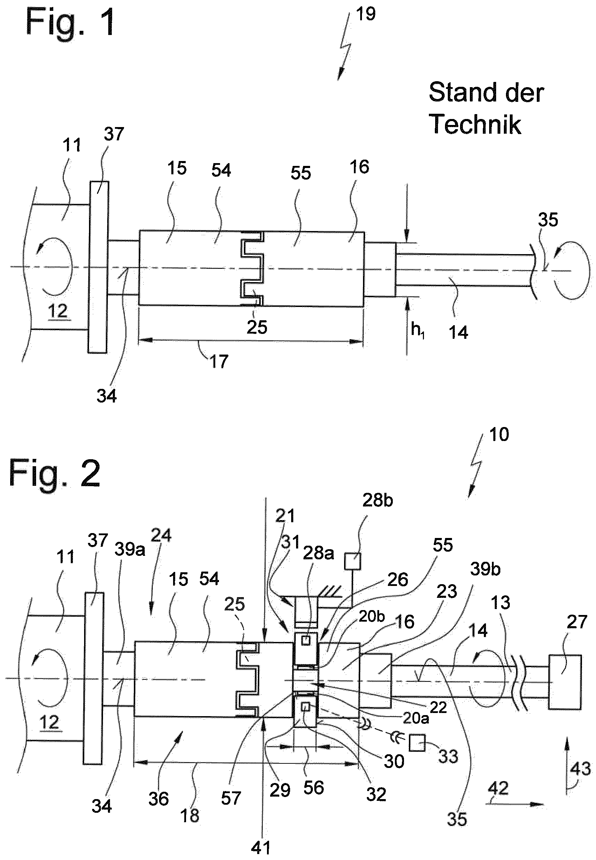

Eine erfindungsgemäße Vorrichtung ist in ihrer Gesamtheit in den Figuren mit dem Bezugszeichen 10 bezeichnet, beispielsweise wie in Fig. 2 dargestellt.

Die Vorrichtung 10 ist bezüglich ihrer Abmessungen ähnlich oder identisch ausgebildet zu einer Vorrichtung 19 des Standes der Technik, die in Fig. 1 dargestellt ist.

Die erfindungsgemäße Vorrichtung 10, und gleichermaßen auch die Vorrichtung 19 des Standes der Technik, dienen dazu, einen Antrieb 11 mit einem Abtrieb 13 zu verbinden und zwischen diesen beiden Teilen Drehmomente zu übertragen. Der Antrieb 11 kann z. B. von einem Motor 12 bereitgestellt sein, der ein Schwungrad 37 drehantreibt. Die Vorrichtung 10 bzw. 19 weist einen antriebsseitigen Befestigungsbereich 15 auf, und kann unmittelbar oder, wie in den Figuren 1 und 2 dargestellt, unter Zuhilfenahme eines Adapterstücks 39a, mit dem Schwungrad 37 verbunden werden, insbesondere verschraubt werden.

Abtriebsseitig weist die Vorrichtung 10 bzw. 19 einen abtriebsseitigen Befestigungsbereich 16 auf, der unmittelbar, oder mittelbar, gegebenenfalls unter Zuhilfenahme eines Adapterstückes 39b, mit dem Abtrieb 11, z. B. mit einer Abtriebswelle 14 verbunden werden kann.

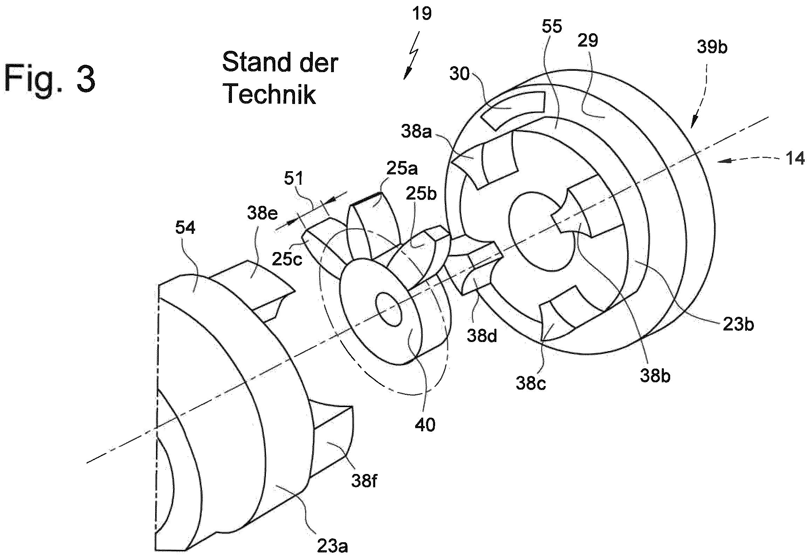

Die Vorrichtung 10 gemäß der Erfindung und die Vorrichtung 19 gemäß dem Stand der Technik können einen Aufbau z. B. derart aufweisen, wie er in Fig. 3 - in Übereinstimmung mit den Figuren 1 und 2 - dargestellt ist:
Demnach umfasst eine Kupplung 10, 19 eine erste Kupplungshälfte 54 und eine im montierten Zustand drehschlüssig mit der ersten Kupplungshälfte 54 verbundene zweite Kupplungshälfte 55. Diese beiden Kupplungshälften 54, 55 können ähnlich oder auch identisch zueinander ausgebildet sein. Sie umfassen jeweils eine Nabe 23a, 23b, von der sich bei dem Ausführungsbeispiel der Fig. 3 jeweils vier Klauen 38a, 39b, 38c, 38d weg erstrecken. Fig. 3 zeigt bezüglich der linken Kupplungshälfte 54 nur zwei Klauen 38e, 38f. Dem Fachmann ist aber deutlich, dass auch die linke Kupplungshälfte 54 vier Klauen aufweist.

Der guten Ordnung halber sei darauf hingewiesen, dass es auf die Zahl der Klauen nicht ankommt.

Die Erfindung bezieht sich zwar vorzugsweise auf Klauenkupplungen, aber nicht ausschließlich auf Klauenkupplungen.

Jede der Klauen 38a, 38b, 38c, 38d weist eine axiale Baulänge 50 auf. Die beiden Kupplungshälften 54, 55, werden in etwa 45° zueinander drehumfangsversetzt angeordnet, derart, dass die Klauen sich in Axialrichtung insbesondere vollständig überdecken.

Zwischen jeweils einer Klaue 38a, 38b, 38c, 38d einer Kupplungshälfte 55 und jeweils einer anderen Klaue 38e, 38f der anderen Kupplungshälfte 54 befindet sich im montierten Zustand ein Elastomerkörper 25a, 25b, 25c, d. h. ein gummielastisches Element. Bei dem Ausführungsbeispiel der Fig. 3 ist eine Kupplung dargestellt, bei der die gummielastischen Elemente 25a, 25b, 25c von einem Elastomerkranz 40 bereitgestellt sind.

Dargestellt sind gemäß Fig. 3 nur drei Elastomerkörper. Tatsächlich weist die erfindungsgemäßen Vorrichtung 10 eine Zahl an Elastomerkörpern 25a, 25b, 25c auf, die der Zahl der Klauen 38a, 38b, 38c, 38d entspricht, so dass bei dem Ausführungsbeispiel gemäß Fig. 3 acht gummielastische Elemente 25a, 25b, 25c usw. vorgesehen sind.

Eine Montage der Kupplung 10 kann durch Vornahme axialer Steckbewegung erfolgen.

Die Vorrichtung 19 des Standes der Technik gemäß Fig. 1 sowie gleichermaßen auch eine erfindungsgemäße Vorrichtung wird gemeinhin auch als eine Kupplung bezeichnet. Die Kupplung 19 des Standes der Technik und auch eine erfindungsgemäße Vorrichtung 10 ermöglicht eine Übertragung von Drehmomenten von dem um die antriebsseitige Drehachse 34 rotierenden Antrieb 11 zu dem um die abtriebsseitige Drehachse 35 rotierenden Abtrieb 13. Die gummielastischen Elemente 25a, 25b, 25c, 25d, die jeweils zwischen zwei Klauen 38a, 38b, 38c, 38d, 38e, 38f unterschiedlicher Kupplungshälften 54, 55 angeordnet sind, ermöglichen dabei eine Schwingungsdämpfung. Zugleich ermöglichen die gummieleatischen Elemente 25a, 25b, 25c, 25d einen Ausgleich von Winkelversatz und/oder Axialversatz und/oder Radialversatz, bezogen auf Antrieb 11 und Abtrieb 13 bzw. bezogen auf die antriebsseitige Drehachse 34 und die abtriebsseitige Drehachse 35.

Eine Kupplung, wie in Fig. 1 dargestellt, wird von der Anmelderin seit Jahrzehnten unter der Bezeichnung "ROTEX" in großen Stückzahlen vertrieben.

Bezogen auf die Axialrichtung 42 weist die Vorrichtung 19 des Standes der Technik eine axiale Baulänge 17 auf. Die axiale Baulänge 17 ist mit anderen Worten der Abstand zwischen dem antriebsseitigen Befestigungsbereich 15 und dem abtriebsseitigen Befestigungsbereich 16.

Die Vorrichtung 19 des Standes der Technik weist eine radiale Bauhöhe 41 auf, die die Erstreckung der Vorrichtung 19 in Radialrichtung 43 beschreibt.

Nachfolgend soll anhand der Figuren 2 und 4 bis 7 ein Ausführungsbeispiel einer erfindungsgemäßen Vorrichtung 10 erläutert werden. Dabei werden der Einfachheit halber, soweit gleiche oder ähnliche Teile oder Elemente oder Bereiche, wie bei der Vorrichtung 19 des Standes der Technik gemäß Fig. 1, bezeichnet werden, auch gleiche Bezugszeichen verwendet.

Die erfindungsgemäße Vorrichtung 10 weist eine gleiche axiale Baulänge 18 auf wie die axiale Baulänge 17 der Vorrichtung 19 des Standes der Technik.

Die axiale Baulänge 18 kann höchstens geringfügig, insbesondere etwa maximal 10%, von der axialen Baulänge 17 der Vorrichtung 19 des Standes der Technik abweichen.

Die erfindungsgemäße Vorrichtung 10 gemäß Fig. 2 unterscheidet sich von der Vorrichtung 19 des Standes der Technik durch eine Einrichtung 21 zur Drehmomentmessung.

Hierzu ist die Nabe 23, an der die Klauen 38a, 38b, 38c, 38d angeordnet sind, ausgedreht oder in einer sonstigen Weise bearbeitet, so dass ein Rücksprung 26 gebildet ist. Im Bereich des Rücksprunges 26 weist die Nabe 22 einen tordierbaren Abschnitt 22 auf. Dieser ist in Axialrichtung kurz gehalten und weist etwa eine axiale Länge 56 auf, die z. B. etwa ein Drittel der axialen Länge der Nabe 23 trägt.

Der tordierbare Abschnitt 22 umfasst einen Außendurchmesser 45, der geringer, insbesondere deutlich geringer, ist als der Außendurchmesser 44 des Nabe 23. Es findet also im Bereich dieses tordierbaren Abschnittes 22 eine Materialschwächung der Nabe 23 statt. In Folge der Materialschwächung der aus Metall, z. B. aus Stahl, bestehenden Nabe 23 ist eine erleichterte Tordierbarkeit erreicht. Diese Tordierbarkeit wird zur Drehmomentmessung genutzt.

Hierzu weist die Einrichtung 21 zur Drehmomentmessung Dehnungsmessstreifen (DMS) 20a, 20b auf. Diese sind unmittelbar auf der Außenumfangsfläche 57 des tordierbaren Abschnittes 22 angebracht.

In radialer Überdeckung zu den Dehnungsmessstreifen 20a, 20b, insbesondere auch teilweise oder vollständig innerhalb des Rücksprunges 26, und/oder insbesondere in radialer und/oder axialer Überdeckung des Rücksprunges 26, ist ein Ringkörper 29 angeordnet. Dieser weist in Fig. 2 nicht dargestellte elektrische und elektronische Bauelemente auf.

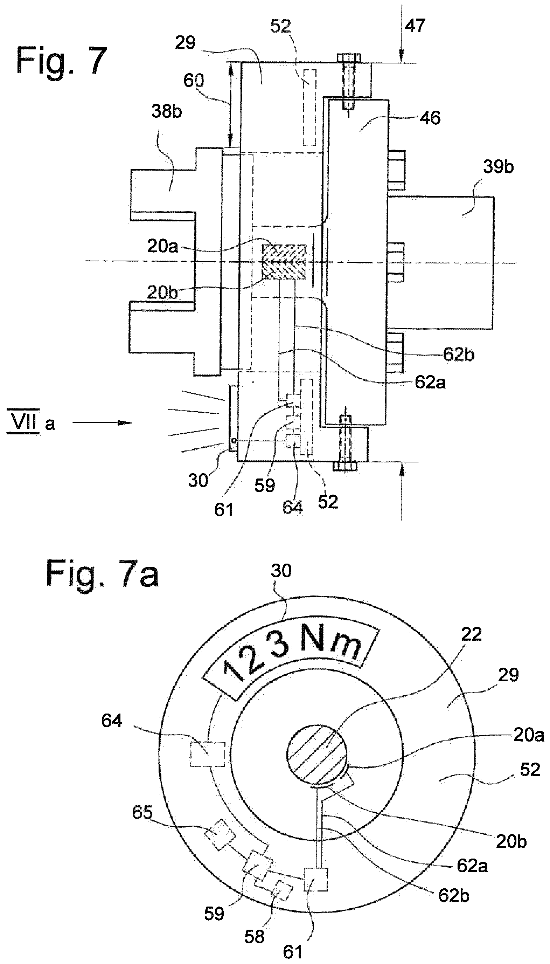

Hierzu gehört z. B. eine Kopplereinheit 58 (vgl. Fig. 7a), mit der sich die von einem sogenannten Pick-up 31, also einer ortsfest angeordneten Spannungsversorgungseinheit 31, induktiv auf die Kopplereinheit 58 aufgekoppelte Energie derartig nutzen lässt, dass sämtliche elektronischen und elektrischen Bauelemente der Einrichtung 21 mit Spannung versorgt werden können.

Insbesondere ermöglicht die induktive Energieübertragung eine Ausbildung der erfindungsgemäßen Einrichtung derart, dass sie ohne Batterien und Akkumulatoren auskommt. Auch auf Schleifkontakte für eine unmittelbare Stromleitung oder Spannungsübertragung kann verzichtet werden.

Zu der Kopplereinheit 58 kann insbesondere eine Sekundärspule 53 gehören, die mit der Kopplereinheit 58 verbunden ist und induktiv die von einer ortsfesten Spannungsversorgungseinheit 31, die z. B. ebenfalls eine Spule aufweist, induktive übermittelte Energie aufnehmen kann.

Vorteilhaft umfasst die Einrichtung 21 eine Steuerung 59, die mit der Kopplereinheit 58 verbunden ist.

Darüber hinaus kann die Steuerung 59 mit den Dehnungsmessstreifen 20a, 20b verbunden sein, insbesondere unter Zwischenschaltung einer Messelektronik 61.

Sofern in dieser Patentanmeldung von Elektronik, elektronischen Bauelementen, elektronischen Bausteinen die Rede ist, werden hier allgemeine Funktionsbegriffe verwendet. Die elektronischen Bauelemente können Schaltungen umfassen und auch in Prozessoren oder Gruppen von Bauelementen zusammengefasst sein.

Weiter umfasst die Einrichtung 21 eine mitdrehende Anzeigeeinrichtung 30. Diese kann z. B. eine Anzeige 48 des aktuell übertragenen Drehmomentes und eine Anzeige 49 der aktuellen Drehzahl umfassen. Das Anzeigeelement 30 kann nach Art einer Stroboskopanzeige ausgebildet sein und ein feststehendes Bild erzeugen.

Während sich die gesamte Kupplung 10, einschließlich des antriebsseitigen Befestigungsbereiches 15 und des abtriebsseitigen Befestigungsbereiches 16, bei einer hohen Drehzahl von beispielsweise mehreren Hundert Umdrehungen pro Minute dreht, kann die Anzeige 48, 49, wie später erläutert wird, zur Darstellung eines ortsfesten, nicht mitdrehenden Bildes, angesteuert werden, z. B. durch eine geeignete Stroboskopansteuerung.

Die Einrichtung 21 kann darüber hinaus ein Kommunikationsmodul 32 aufweisen, das mit einer externen Signalempfangseinheit 33 eine Funkverbindung eingehen kann, und Messwerte, z. B. Werte, die mit gemessenen übertragenen Drehmomenten zusammenhängen, an die Signalempfangseinheit 33 übermitteln kann.

Die gesamte Einrichtung 21 ist mit der Vorrichtung 10 mitdrehend ausgebildet.

Die Signalempfangseinheit 33 und die Spannungsversorgungseinheit 31, die auch als Pick-up bezeichnet wird, sind ortsfest ausgebildet.

Wie die induktive Übertragung von Versorgungsspannung von dem ortfesten Pick-up 31 auf die Einrichtung 21 bzw. zu der Kopplereinheit 58 im Detail erfolgt, verbleibt im Belieben des Fachmanns. Derartige Energieübertragungsprinzipien zur Spannungsversorgung drehender Elemente sind aus dem Stand der Technik hinlänglich bekannt.

Darüber hinaus soll vorliegend nicht im Detail beschrieben werden, wie die Dehnungsmessstreifen 20a, 20b Messwerte generieren, um eine Torsion zwischen dem antriebsseitigen und dem abtriebsseitigen Ende des tordierbaren Abschnittes 23 zu messen und wie die weitere Signalverarbeitung durch die Messelektronik 61 sowie durch gegebenenfalls weitere vorgesehene Recheneinheiten, z. B. auch unter Teilnahme der Steuerung 59 oder einer anderen, nicht dargestellten Rechnereinheit, weiter abläuft. Dies ist ebenfalls Stand der Technik und dem Fachmann bekannt.

Eine Besonderheit besteht gemäß einem ersten Aspekt der Erfindung darin, die Einrichtung 21 mitdrehend auszubilden und unmittelbar an der Nabe 23 anzuordnen bzw. dafür an der Nabe 23 einen entsprechenden Rücksprung 26 vorzusehen, so dass die Nabe 23 einen tordierbaren Abschnitt 22 ausbildet.

Erfindungsgemäß kann die Vorrichtung 10 z. B. dazu eingesetzt werden, eine Übertragung von Drehmomenten zu einer oder innerhalb einer Maschine 27, wie lediglich angedeutet in Fig. 1, oder einer Anlage, zu überwachen, gegebenenfalls auch zu steuern oder gegebenenfalls auch zu dokumentieren. Werden z. B. Unregelmäßigkeiten in der Drehmomentübertragung oder unerwartete Ereignisse festgestellt, z. B. ein Überschreiten eines Schwellwertes des zu übertragenden Drehmomentes, kann z. B. unter Zuhilfenahme eines Wamsignalgenerators 28a, 28b ein Warnsignal generiert werden. Der Wamsignalgenerator 28a, 28b kann an der Einrichtung 21 angeordnet und mitdrehend angeordnet sein, oder alternativ ortsfest angeordnet sein und von der Einrichtung 21 ein Signal übermittelt erhalten.

Aufgrund der Wahl der Abmessungen 17, 18 und 41 der erfindungsgemäßen Vorrichtung 10 in Bezug zu der Vorrichtung 19 des Standes der Technik kann erfindungsgemäß ein Austausch einer in einer Montageumgebung 36 installierten Vorrichtung 19 des Standes der Technik durch eine erfindungsgemäße Vorrichtung 10 vorgenommen werden. Dabei ist es möglich, die Montageumgebung 36 beizubehalten und keinerlei Änderung oder höchstens geringfügige Änderungen an der Montageumgebung 36 durchzuführen.

Angemerkt sei, dass, wie z. B. Fig. 2 zeigt, die radiale Bauhöhe 41 der Vorrichtung 10 durch die Abmessungen des Außendurchmessers 47 des Ringkörpers 29 bereitgestellt werden, der die Nabe 23 bezüglich ihres Außendurchmessers 44 in Radialrichtung überragt. In Folge des Überstandes 60 kann Raum geschaffen werden für eine Anzeigeeinrichtung 30. Dabei werden die Abmessungen so gewählt, dass trotz einer größeren radialen Bauhöhe 41 der erfindungsgemäßen Vorrichtung 10 gegenüber der Vorrichtung 19 des Standes der Technik ein Austausch einer in einer Montageumgebung 36 installierten Vorrichtung 19 des Standes der Technik durch eine erfindungsgemäße Vorrichtung ohne weiteres möglich ist.

Wie die erfindungsgemäße Vorrichtung 10 konkret mechanisch an einen Antrieb 11 oder an einen Abtrieb 13 angebunden ist, bleibt dem Fachmann überlassen. Der Fachmann kann hierzu auf verschiedene, geeignete Ansätze zurückgreifen, beispielsweise auf Steckverbindungen, Schraubverbindungen, Flanschverbindungen, Presspassungen, Radial- oder Axialverschraubung, oder auf Anschlüsse unter Verwendung von Spannsätzen oder dergleichen.

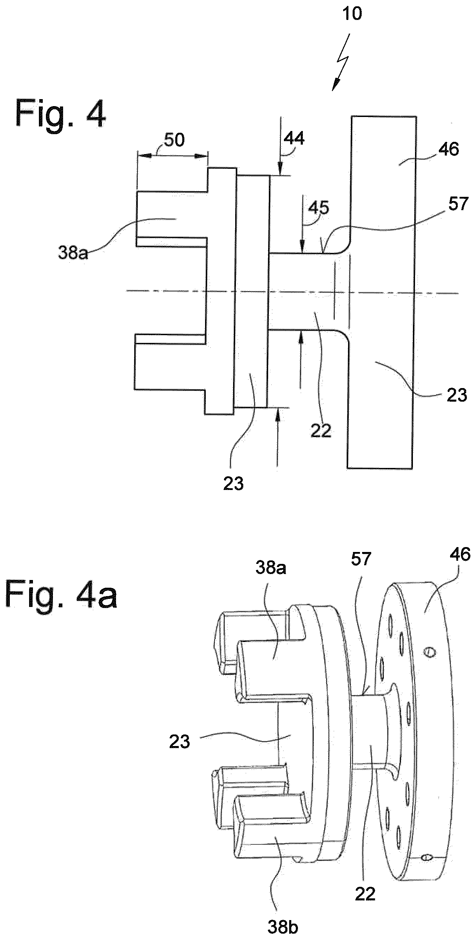

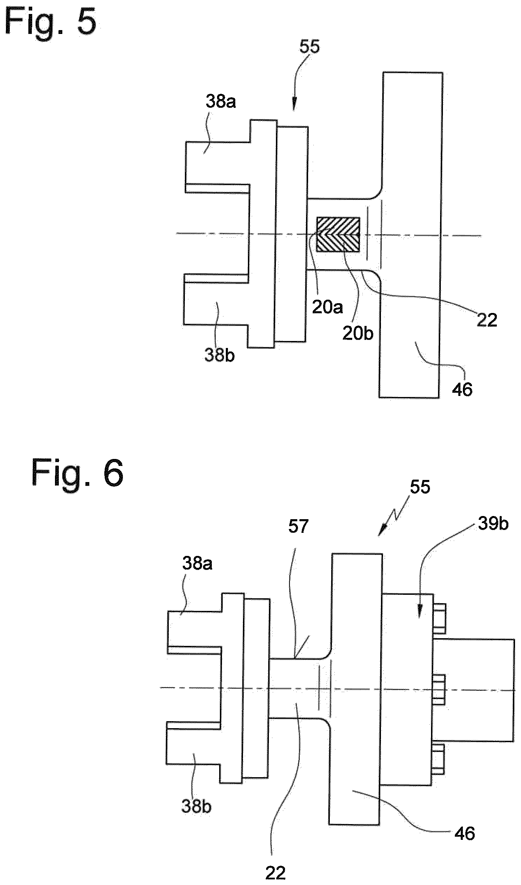

Die Figuren 4, 4a und 5 veranschaulichen an einer Kupplungshälfte 55 zur Erläuterung eines abtriebsseitigen Befestigungsbereiches 16 oder zur Erläuterung eines antriebsseitigen Befestigungsbereichs 15 lediglich einen mit verschiedenen Bohrungen ausgestatteten Flansch. Vorzugsweise wird, wie dies Figur 6 darstellt, ein Adapterstück 39 b eingesetzt, das nach Art eines Adapters unterschiedliche Möglichkeiten einer Befestigung an einer Welle 14 oder an einem Schwungrad 37 bereitstellt.

Vorteilhaft ist, wenn die Abmessungen der erfindungsgemäßen Vorrichtung 10 den Abmessungen der Vorrichtung 19 des Standes der Technik entsprechen oder im Wesentlichen den Abmessungen der Vorrichtung 19 des Standes der Technik entsprechen.

Die erfindungsgemäße Vorrichtung 10 ist im Übrigen bezüglich ihres Aufbaus nicht geändert und weist gleichermaßen, wie z. B. anhand des Ausführungsbeispiels der Fig. 1 der Vorrichtung 19 des Standes der Technik erläutert, gummielastische Elemente 25a, 25b, 25c auf, die z. B. an einem Elastomerkranz 40 angeordnet sein können.

Damit besteht die Möglichkeit, dass die erfindungsgemäße Vorrichtung 10 im Vergleich zu einer Vorrichtung 19 des Standes der Technik gleiche Drehmomentübertragungseigenschaften und gleiche andere physikalische Eigenschaften aufweist. Damit können z. B. mit der erfindungsgemäßen Vorrichtung 10 unverändert oder im Wesentlichen unverändert dieselben Kennlinien für eine Drehmomentübertragung erzielt werden wie mit einer Vorrichtung 19 des Standes der Technik.

Ergänzend sei angemerkt, dass die axiale Länge 51 der Elastomerkörper 25a (vgl. Fig. 3) etwa der axialen Länge 50 einer Klaue entspricht.

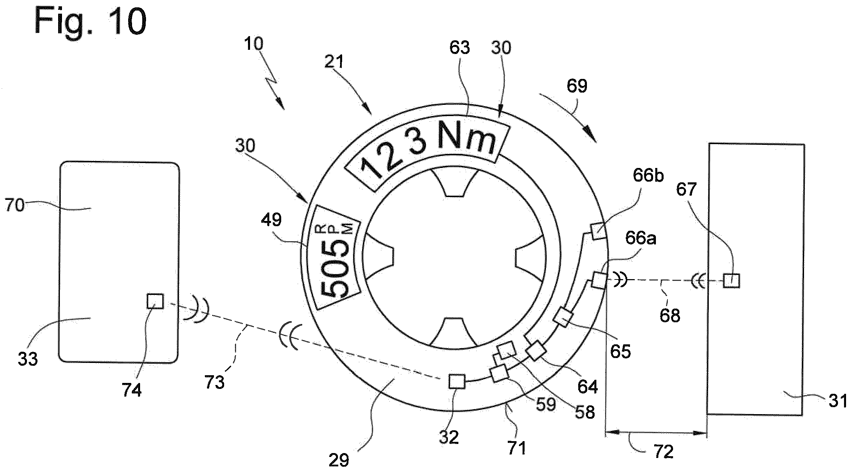

An der Einrichtung 21 kann eine Platine 52 angeordnet sein, die die zuvor erläuterten elektronischen Bauelemente 58, 59, 32, 30 trägt und/oder mit Betriebsspannung versorgt. An der Platine sind weiterhin vorzugsweise die Messelektronik 61 und gegebenenfalls noch weitere elektronische Bauteile und Schaltungen angeordnet. Die Platine 52 kann z. B. ringförmig ausgebildet sein, wie dies Fig. 10 andeutet. Die Einrichtung 21 kann auch mehrere Platinen umfassen.

An dem Ringkörper 29 kann eine Sekundärspule 53 angeordnet sein, die wesentlicher Bestandteil der Kopplereinheit 58 ist oder die mit diesem verbunden ist.

Fig. 5 zeigt den tordierbaren Abschnitt 22 mit darauf angebrachten Dehnungsmessstreifen 20a, 20b. Die Zahl und die Anordnung und die Positionierung der Dehnungsmessstreifen stehen im Belieben des Fachmanns.

Die Dehnungsmessstreifen 20a, 20b sind, wie Fig. 7 lediglich schematisch illustriert, über Signal- oder Verbindungsleitungen 62a, 62b mit einer Messelektronik 61 verbunden. Die Messelektronik 61 ist über eine Verbindungsleitung 62c mit der Steuerung 59 verbunden. Die übrigen elektronischen Bauelemente sind in Fig. 5 der Übersichtlichkeit halber nicht dargestellt.

Die Längen der Leitungsabschnitte 62a, 62b sind nicht maßstäblich zu verstehen.

Die Montage des Ringkörpers 29 auf der Vorrichtung 10 läuft z. B. wie folgt ab:
Zunächst werden die Dehnungsmessstreifen, insbesondere mit daran bereits befestigten Leitern 62a, 62b oder mit daran steckbar oder klemmbar festlegbaren Leitern an der Außenumfangsfläche 57 des tordierbaren Abschnittes 22 befestigt, z. B. festgeklebt. Insbesondere werden die DMS (Dehnungsmessstreifen) zunächst verklebt, und nachfolgend mit Anschlussdrähten verlötet. Die Anschlussdrähte ragen sodann noch aus der Ausdrehung heraus und können nachfolgend mit der Platine verlötet werden. Sodann wird die gesamte Einheit 21, zusammen mit dem Ringkörper 29, in Axialrichtung, bezogen auf Fig. 5 von links kommend, über die Klauen 38a, 38b, 38c, 38d geschoben, bis der Ringkörper 29 an dem Befestigungsflansch 46 anliegt. Er kann dort befestigt, z. B. radial verschraubt werden, wie dies Fig. 7 andeutet.

Die Leitungen 62a, 62b können im montierten Zustand des Ringkörpers 29 beispielsweise, zumindest teilweise, radial innerhalb der in Fig. 5 nicht dargestellten, z. B. ringförmig ausgebildeten Elektronikplatine 52, jedenfalls innerhalb des Rücksprunges 26 an der Nabe 23, verlaufen und die Dehnungsmessstreifen 20a, 20b mit den entsprechenden elektronischen Bauelementen an der Platine 52 verbinden.

Findet in Folge einer Übertragung eines Drehmomentes von Antrieb 11 zu Abtrieb 13 eine Verdrehung, also eine Torsion, des tordierbaren Abschnittes 22 statt, führt dies in den Dehnungsmessstreifen 20a, 20b zu einem veränderten messbaren Verhalten, insbesondere zu einem veränderten Widerstandsverhalten und/oder zu einem geänderten Spannungsverhalten oder zu einem geänderten Stromverhalten. Die Messelektronik 61 kann eine Messung dieser Änderung der Spannung oder des Widerstandes oder anderer physikalischer Eigenschaften der Dehnungsmessstreifen 20a, 20b vornehmen. Eine Auswertung dieser Messung kann durch die Messelektronik 61 alleinig oder gegebenenfalls in Kooperation mit der Steuerung 59 oder alleinig durch die Steuerung 59 erfolgen, oder gegebenenfalls auch mit anderen, in den Figuren nicht dargestellten elektronischen Bauelementen.

Im Folgenden soll, insbesondere anhand der Fig. 10, die Anzeigeeinrichtung 30, die auch als Anzeigeelement 30 bezeichnet wird, näher erläutert werden.

Fig. 10 veranschaulicht in einer blockschaltbildartigen, schematischen Prinizipdarstellung das Zusammenspiel zwischen der Einrichtung 21, der Spannungsversorgungseinheit 31, dem sogenannten Pick-up, und einem mobilen Empfangsgerät 70.

Wie bereits beschrieben, verfügt die Spannungsversorgungseinheit 31 z. B. über eine nicht dargestellte Primärspule. Die Spannungsversorgungseinheit 31 ist ortsfest angeordnet, insbesondere nicht mit der Vorrichtung 10 mitdrehend.

Der Abstand zwischen dem Außenumfang 71 des Ringkörpers 29 und dem Pick-up 31 ist in Fig. 10 mit dem Bezugszeichen 72 bezeichnet. Der Abstand kann z. B. 2 mm und 50 mm, vorzugsweise etwa 5 - 20 mm betragen. Von der Erfindung sind auch größere und auch kleinere Abstände umfasst, je nachden technischen Gegebenheiten der Montageumgebung.

Die Spannungsversorgungseinheit 31 ist über nicht dargestellte Bauteile und Elemente an das ebenfalls nicht dargestellte Spannungsversorgungsnetz angeschlossen und kann die zuvor erläuterte Sekundärspule 53 an der Einrichtung 21 induktiv mit Spannung versorgen. Die zuvor beschriebene Kopplereinheit 58 kann hieraus die zum Betrieb der Einrichtung 21 erforderliche Versorgungsspannung gewinnen. Die Kopplereinheit 58 oder eine mit der Kopplereinheit verbundene Schaltung oder ein Bauelement kann die von der Sekundärspule 53 erhaltene Spannung in eine zur Versorgung der Einrichtung 21 mit Betriebsspannung erforderliche Spannung bei Bedarf umwandeln.

Mit der induktiv erhaltenen Versorgungsspannung werden sämtliche elektronische Bauelemente der Einrichtung 21 mit Betriebsspannung versorgt.

Hierzu gehört neben der zuvor beschriebenen Steuerung 59 der Einrichtung 21 auch eine in Fig. 10 angedeutete Steuerung 64, zur Steuerung des Anzeigeelementes 30. Angemerkt sei an dieser Stelle, dass die Steuerung 64 z. B. integraler Bestandteil der zuvor beschriebenen Steuerung 59 sein kann oder mit dieser gemeinsam ein elektrisches Bauelement ausbilden kann oder von der Steuerung 59 gesondert ausgebildet sein kann.

Die Steuerung 64 zur Ansteuerung der Anzeige 30 ist gemäß dem Ausführungsbeispiel gemäß Fig. 10 mit einer weiteren Messelektronik 65 verbunden. Diese ist in der Lage, die Drehzahl der Vorrichtung 10 zu bestimmen. Hierzu ist die Messelektronik 65 vorteilhafterweise mit einem ersten Empfänger 66a und einem zweiten Empfänger 66b verbunden.

Die Messelektronik 65 kann auch unmittelbar mit der Steuerung 59 verbunden sein oder Bestandteil der Steuerung 59 sein.

An dem Pick-up 31 ist ein Sender 67 angeordnet. Der Sender kann beispielsweise ein Lichtsignal emittieren, z. B. einen Laserstrahl. Der Sender 67 kann insbesondere wenigstens eine infrarotes Licht emittierende LED umfassen. Es können auch zwei oder mehrere derartiger Sender an der Spannungsversorgungseinheit 31 angeordnet sein.

Das von dem Sender 67 emittierte Licht, oder das emittierte Signal, kann, wenn der Empfänger 66a die Stellung relativ zu dem Sender 67 passiert, in der er zum Beispiel den kürzesten Abstand zu dem Sender 67 einnimmt, von dem Empfänger 66a detektiert werden.

Der Empfänger 66a kann z. B. als Fotodiode oder als Fotodetektor ausgebildet sein.

Damit ist die Drehposition der Einrichtung 21 zu diesem Moment bekannt. Die Empfänger 66a, 66b sind mit der Einrichtung 21 ebenfalls mitdrehend ausgebildet.

Immer dann, wenn die Messelektronik 65 eine bestimmte Drehposition feststellt, zum Beispiel dadurch, dass der kürzeste Abstand zu dem Sender 67 von dem Empfänger 66a erreicht ist, also immer dann, wenn an dem Empfänger 66a, 66b ein Signal gemessen werden kann, kann die Steuerung 64 z. B. veranlassen, dass die Anzeige 30 angesprochen wird, gegebenenfalls mit einer konstanten - oder drehzahlabhängigen - Ansteuerungsverzögerung. Dieser Zeitpunkt kann aber auch als Generation eines Trigger-Signals zum Anlass genommen werden.

Hierdurch kann die Anzeige 30 ein stehendes Bild 63 generieren, das insbesondere nicht mitdreht. Die Anzeige 30 ist insbesondere nach Art einer Stroboskopanzeige ausgebildet. Es werden jeweils nur schnelle Ansteuerungsimpulse generiert. Aufgrund der für das menschliche Auge zeitlich nicht mehr auflösbaren Bildunterschiede nimmt der Betrachter das Bild als stehend wahr.

Eine genauere Beschreibung des Ansteuerungsprinzips befindet sich weiter unten.

Entlang der Axialrichtung können mehrere Sender 67 - was in den Figuren nicht dargestellt ist - in Reihe angeordnet sein. Hierdurch können Einbau- oder Montagetoleranzen axial ausgeglichen werden, so dass auch bei einer geringfügigen axialen Verschiebung der Kupplung relativ zu dem Sender 67 sichergestellt ist, dass der Empfänger 66a, 66b ein Signal empfängt.

Wenn, wie bei dem Ausführungsbeispiel gemäß Fig. 10 vorgesehen, ein zweiter Empfänger 66b vorgesehen ist, kann aufgrund der zeitlichen Aufeinanderfolge der Detektion des von dem Sender 67 emittierten Signals an den Empfängern 66a und 66b auch der Drehsinn 69 der Vorrichtung festgestellt werden. Eine Feststellung des Drehsinns 69 der Vorrichtung erlaubt ebenfalls eine an den festgestellten Drehsinn angepasste Anzeige.

Gleichermaßen erlaubt die Signalmessung durch die Messelektronik 65 der unterschiedlichen, an den beiden Empfängern 66a, 66b ankommenden Signale durch die Messelektronik auch eine Geschwindigkeitsmessung oder eine Bestimmung der Drehzahl der Vorrichtung.

Bei dem Ausführungsbeispiel gemäß Fig. 10 ist die Signalstrecke 68 zwischen Sender 67 und Empfänger 66a von einem Infrarot-Lichtpfad bereitgestellt. In Frage kommen auch Signalpfade derart, dass diese magnetisch ausgebildet sind. Z. B. kann der Sender 67 ein Magnetfeld generieren, z. B. einen Permanentmagneten bereitstellen, wobei dessen Magnetfeld von einem Empfänger 66a detektierbar ist. Der Empfänger 66a ist dann z. B. ein Magnetfeldsensor.

Gleichermaßen können Kapazitäten, akustische Signale, elektromagnetische Signale, elektrische Feldstärken oder andere physikalische Signale, sowie z. B. auch Wärmemessungen oder dergleichen, erfolgen. Entscheidend ist, dass mit der Anordnung von Sender 67 und Empfänger 66 eine Positionsbestimmung möglich ist, so dass von der Messelektronik 65 eine Art Triggersignal aufgenommen werden kann, das von der Steuerung 65 verarbeitet werden kann, um die Anzeige 30 stroboskopartig anzusteuern.

Von der Einrichtung 21, z. B. initiiert von der Steuerung 59, kann über ein Kommunikationsmodul 32 eine Kommunikationsverbindung zu einem mobilen Empfänger 70, z. B. zu einem Smartphone, aufgebaut werden. Die Steuerung 59 kann über das Kommunikationsmodul 32 Informationen an das mobile Empfangsgerät 70, z. B. ein Smartphone - alternativ auch an ein nicht dargestelltes stationäres Empfangsgerät - übermitteln. Beispielsweise kann eine Information über das aktuell gemessene, übertragene Drehmoment oder über eine Drehzahl übermittelt werden. Eine solche Signalübermittlung kann entlang eines Funkpfades 73 erfolgen.

Hierzu kann das Kommunikationsmodul 32 beispielsweise einen Funkpfad 73 nach dem Bluetooth-Protokoll, insbesondere nach dem Bluetooth LE-Protokoll umfassen.

Das Anzeigeelement 30 kann eine Vielzahl von Informationen anzeigen, z. B. wie in Fig. 10 dargestellt, eine Anzeige des aktuellen von der Vorrichtung 10 übertragenen Drehmomentes und/oder eine Angabe eines Schwellwertes für ein maximal zu übertragendes Drehmoment.

Auch die aktuelle Drehzahl kann angezeigt werden, sowie z. B. eine maximal zulässige oder eine minimal zulässige Drehzahl.

Auch andere Informationen können angezeigt werden.

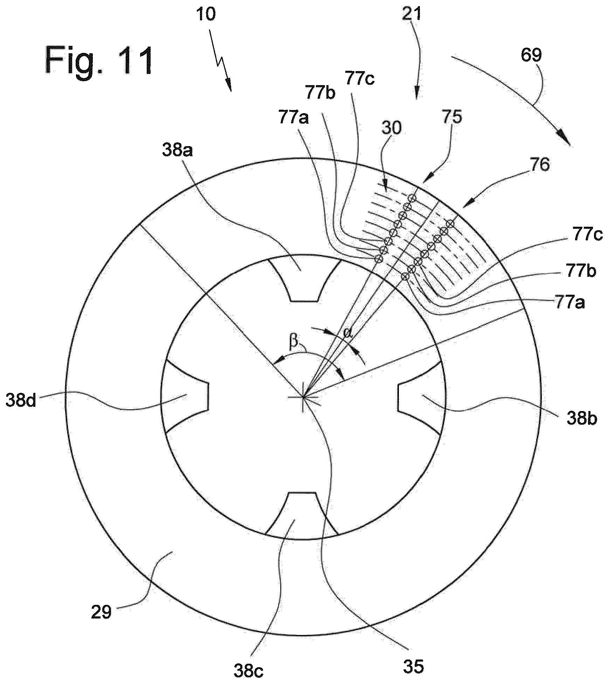

Anhand des Ausführungsbeispiels der Fig. 11 soll eine besondere Anzeigeeinrichtung 30 oder ein besonderes Anzeigeelement 30 erläutert werden: Bei dieser Ausführungsform ist das Anzeigeelement mit einer LED-Einheit 75 ausgestattet. Diese umfasst eine Mehrzahl von z. B. acht LED's 77a, 77b, 77c, 77d, 77e, 77f, 77g, 77h. Die Mehrzahl der LED's ist entlang einer in Radialrichtung verlaufenden Geraden ausgerichtet und fest an dem Ringkörper 29 bzw. fest an der Platine 52 angeordnet.

Die LED-Einheit 75 ist in Fig. 11 in einer ersten Position und in einer geänderten, zweiten Position 76 dargestellt. In der geänderten, zweiten Position ist der Ringkörper 29 um den Winkel α im Drehsinne 69 verdreht worden.

Die in Fig. 11 nicht dargestellte Steuerung 64 steuert die einzelnen LED's 77a, 77b, 77c, 77d, 77e, 77f, 77g, 77h der LED-Einheit 75 derartig an, dass diese in unterschiedlichen Drehumfangspositionen der Vorrichtung derart unterschiedlich eingeschaltet und ausgeschaltet werden, dass sich in Abhängigkeit von der Drehzahl der Vorrichtung 10 ein Standbild mit einem erkennbaren Informationsgehalt ergibt.

So können z. B. einige der LED's in der Position 75 eingeschaltet und dieselben LED's in der Position 76 ausgeschaltet sein oder in der Position 76 noch eingeschaltet sein.

Bei einem Ausführungsbeispiel der Erfindung werden die LED's im Rahmen eines Umlaufs der Vorrichtung und/oder entlang einer Bewegung durch den Winkelbereich β jeweils mehrfach ein- und ausgeschaltet.

Aufgrund der hohen Drehgeschwindigkeit der Vorrichtung 10 und Abhängigkeit von der Einschaltzeit und Ausschaltzeit ergibt sich für einen Betrachter ein Standbild.

Gemäß dem Ausführungsbeispiel der Fig. 11 kann zum Beispiel vorgesehen sein, dass die LED's 77a, 77b, 77c, 77d, 77e, 77f, 77g, 77h innerhalb eines Winkelbereiches β mehrfach eingeschaltet und ausgeschaltet werden können, außerhalb des Winkels β aber grundsätzlich ausgeschaltet sind. Somit definiert der Winkelbereich β das maximal zur Verfügung stehende Anzeigefeld.

Der Beginn der Anzeige, also z. B. der Schriftbeginn, kann erfindungsgemäß immer an derselben Drehumfangsposition der Vorrichtung 10 angeordnet sein.

Die Einschaltzeitpunkte und die Einschalt- bzw. Ausschaltdauern hängen, um ein Standbild zu generieren, selbstredend von der Drehzahl der Vorrichtung 10 ab. Die Steuerung 64 ist dazu ausgebildet, die Ansteuerung der LED's 77a, 77b, 77c, 77d, 77e, 77f, 77g, 77h unter Berücksichtigung der Drehzahl der Vorrichtung 10 derartig vorzunehmen, dass ein Standbild generiert wird.

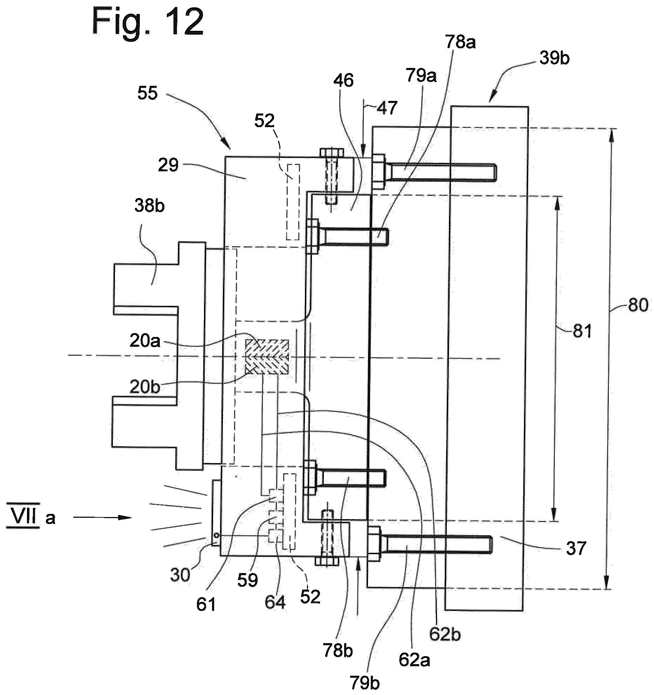

Nachfolgend wird das Ausführungsbeispiel einer erfindungsgemäßen Vorrichtung bzw. einer erfindungsgemäßen Kupplungshälfte 55 gemäß Figur 12 erläutert. Dem Fachmann ist dabei deutlich, dass es sich um eine Kupplungshälfte 55 mit einem abtriebsseitigen Befestigungsbereich 16 oder um eine Kupplungshälfte 54 mit einem antriebsseitigen Befestigungsbereich 15 handeln kann.

An dieser Stelle soll angemerkt werden, dass die Einrichtung 21 zur Messung des Drehmomentes oder zur Messung der aktuellen Drehzahl entweder an der ersten Kupplungshälfte 54 oder an der zweiten Kupplungshälfte 55 angeordnet sein kann.

Gemäß Figur 12 ist das Adapterstück 39b als Flanschscheibe ausgebildet, die einer Festlegung der Kupplungshälfte 55 zum Beispiel an einem Schwungrad 37 eines in Figur 12 nicht dargestellten Motors dient. Hierzu ist das scheibenförmige Adapterstück 39b mit einem größeren Außendurchmesser 80 ausgestattet, als der Außendurchmesser 81 des Befestigungsflansches 46.

Eine Befestigung des Befestigungsflansches 46 an dem Adapterstück 39b erfolgt mittels einer Mehrzahl von Schrauben 78a, 78b. Eine Befestigung des Adapterstückes 39b an dem Schwungrad 37 erfolgt mittels der nur schematisch dargestellten Schrauben 79a, 79b, wobei die Zahl und die Art der Befestigungselemente beliebig ist. Bei dieser Ausführungsform wird also auf einfache und axial platzsparende Weise der Befestigungsflansch 46 hinsichtlich seines Durchmessers vergrößert.

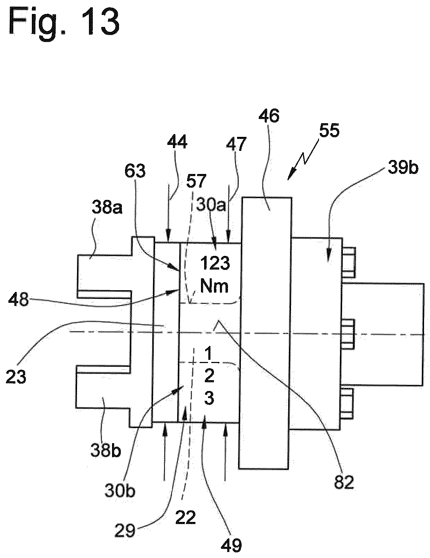

Das Ausführungsbeispiel der Figur 13 entspricht dem Ausführungsbeispiel der Figur 6, wobei hier zusätzlich ein Ringkörper 29 dargestellt ist. Dieser weist einen Außendurchmesser 47 auf, der dem Außendurchmesser 44 der Nabe 23 entspricht. Hier ragt der Ringkörper 29 - anders als bei dem Ausführungsbeispiel der Figur 7 - in Radialrichtung nicht über die Nabe 23 nach außen vor. Die Anzeigeeinrichtung 30a, 30b ist bei diesem Ausführungsbeispiel an der Außenmantelfläche 82 des Ringkörpers 29 angeordnet.

Bei dem Ausführungsbeispiel der Figur 13 wird also die Anzeige nicht in axialer Richtung, sondern in radialer Richtung betrieben.

Wiederum veranschaulicht Figur 13 - in Anlehnung an die zuvor beschriebenen Ausführungsbeispiele - lediglich beispielhaft ein erstes Anzeigeelement 30a und ein zweites Anzeigeelement 30b. Wiederum kann eine Anzeige 48 des zu übertragenen Drehmomentes, nach Art eines stehenden, nicht mit rotierenden Bildes 63 erfolgen. Alternativ oder zusätzlich kann eine Anzeige 49 der momentanen Drehzahl der Vorrichtung 10 vorgesehen sein.

Der Ringkörper 29 kann bei diesem Ausführungsbeispiel aus mehreren Schalenteilen gebildet und zusammengesetzt sein; zum Beispiel aus zwei Halbschalen. Auf diese Weise kann der Ringkörper 29 über den tordierbaren Abschnitt 22 gestülpt und auf einfache Weise an der Nabe 23 befestigt werden.

## Patentansprüche

1. Vorrichtung (10) zur Übertragung von Drehmomenten unter Zwischenschaltung gummielastischer Elemente (25a, 25b, 25c) von einem Antrieb (11), z. B. von einem Motor (12), zu einem Abtrieb (13), z. B. zu einer Abtriebswelle (14), umfassend einen antriebsseitigen Befestigungsbereich (15) und einen abtriebsseitigen Befestigungsbereich (16), wobei zwischen dem antriebsseitigen Befestigungsbereich (15) und dem abtriebsseitigen Befestigungsbereich (16) eine von einer ortsfest angeordneten Spannungsversorgungseinheit (31) induktiv mit Betriebsspannung versorgte, mit den Befestigungsbereichen (15, 16) mitrotierende Einrichtung (21) zur Messung des übertragenen Drehmomentes und/oder zur Bestimmung der Drehzahl der Vorrichtung (10) oder eine von einer ortsfest angeordneten Spannungsversorgungseinheit (31) induktiv mit Betriebsspannung versorgte, mit den Befestigungsbereichen (15, 16) mitrotierende Messelektronik (65) als Bestandteil der Einrichtung (21) angeordnet ist, wobei die Einrichtung (21) ein Kommunikationsmodul (32) umfasst, das zur Übermittlung von Informationen über das übertragene Drehmoment und/oder von Informationen über die Drehzahl der Vorrichtung und/oder anderer, auf einen Zustand der Vorrichtung (10) bezogener und von der Einrichtung (21) erfasster Parameter oder Messwerte an ein Gegenkommunikationsmodul (74) ausgebildet ist.

2. Vorrichtung nach Anspruch 1, **dadurch gekennzeichnet, dass** das Kommunikationsmodul (32) zur Bereitstellung einer Funksignalverbindung nach dem Bluetooth-Protokoll ausgebildet ist.

3. Vorrichtung nach Anspruch 1 oder 2, **dadurch gekennzeichnet, dass** das Kommunikationsmodul (32) zur Bereitstellung einer Funksignalverbindung nach dem Bluetooth LE (low energy)-Protokoll ausgebildet ist.

4. Vorrichtung nach einem der vorangegangenen Ansprüche, **dadurch gekennzeichnet, dass** die Einrichtung (21) ein mitrotierendes Anzeigeelement (30) umfasst, mit dem Informationen über das übertragene Drehmoment und/oder Informationen über die Drehzahl der Vorrichtung und/oder andere, auf einen Zustand der Vorrichtung (10) bezogene und von der Einrichtung (21) erfasste Parameter oder Messwerte anzeigbar sind.

5. Vorrichtung nach einem der vorangegangenen Ansprüche, **dadurch gekennzeichnet, dass** eine Ansteuerung des Anzeigeelementes (30) unter Berücksichtigung der Drehzahl der Vorrichtung (10) derart erfolgt, dass das Anzeigeelement (30) ein stehendes, nicht mitdrehendes Bild (63) anzeigt.

6. Vorrichtung (10) nach Anspruch 2 und Anspruch 4 oder 5, **dadurch gekennzeichnet, dass** das Anzeigeelement (30) nach Art einer Stroboskop-Anzeige ausgebildet ist und/oder dass das Anzeigeelement (30) über eine Funk-Signalverbindung konfigurierbar ist .

7. Vorrichtung (10) nach Anspruch 4 oder 5, **dadurch gekennzeichnet, dass** die Einrichtung (21) eine Steuerung (64) zur Ansteuerung des Anzeigeelementes (30) aufweist.

8. Vorrichtung nach einem der Ansprüche 4 bis 6, **dadurch gekennzeichnet, dass** die Einrichtung (21) eine Messelektronik (65) umfasst, mit der eine Drehzahl der Vorrichtung (10) messbar ist.

9. Vorrichtung nach einem der vorangegangenen Ansprüche, **dadurch gekennzeichnet, dass** die Einrichtung (21) wenigstens einen mitdrehenden Empfänger (66a, 66b) oder einen mitdrehenden Sender und die ortsfest angeordnete Spannungsversorgungseinheit (31) wenigstens einen Sender (67) oder Empfänger, insbesondere zur Ermittlung oder zur Generierung eines Drehpositionssignals und/der zur Generierung eines Triggersignals, umfasst.

10. Vorrichtung nach Anspruch 9, **dadurch gekennzeichnet, dass** der Sender (67) und der Empfänger (66a, 66b) zwischen sich Signalstrecke (68), z.B. eine optische Signalstrecke oder eine elektrische Signalstrecke oder eine magnetische Signalstrecke oder eine elektro-magnetische Signalstrecke, ausbildet.

11. Vorrichtung nach Anspruch 9 oder 10, **dadurch gekennzeichnet, dass** mittels des Senders (67) und des Empfängers (66a) zumindest eine Drehposition der Vorrichtung (10) feststellbar oder überprüfbar oder triggerbar ist.

12. Vorrichtung nach einem der Ansprüche 9 bis 11, **dadurch gekennzeichnet, dass** wenigstens zwei Sender oder wenigstens zwei Empfänger (66a, 66b) vorgesehen sind.

13. Vorrichtung nach Anspruch 12, **dadurch gekennzeichnet, dass** mittels der wenigstens zwei Sender oder mittels der wenigstens zwei Empfänger ein Drehsinn (69) der Vorrichtung feststellbar ist.

14. Verfahren zum Betreiben einer Vorrichtung (10) nach einem der Ansprüche 1 bis 13, zur Übertragung von Drehmomenten unter Zwischenschaltung gummielastischer Elemente (25a, 25b, 25c) von einem Antrieb (11), z.B. von einem Motor (12), zu einem Abtrieb (13), z.B. zu einer Abtriebswelle (14),
a) Bereitstellen einer Vorrichtung (10) umfassend einen antriebsseitigen Befestigungsbereich (15) und einen abtriebsseitigen Befestigungsbereich (16), wobei zwischen dem antriebsseitigen Befestigungsbereich (15) und dem abtriebsseitigen Befestigungsbereich (16) eine mit den Befestigungsbereichen (15, 16) mitrotierende Einrichtung (21) zur Messung des übertragenen Drehmomentes angeordnet ist und/oder zur Bestimmung der Drehzahl der Vorrichtung (10) oder eine von einer ortsfest angeordneten Spannungsversorgungseinheit (31) induktiv mit Betriebsspannung versorgte, mit den Befestigungsbereichen (15, 16) mitrotierende Messelektronik (65) einer Einrichtung (21) zur Bestimmung der Drehzahl der Vorrichtung (10) angeordnet ist, wobei die Einrichtung (21) ein Kommunikationsmodul (32) umfasst,
b) Versorgen der Einrichtung (21) und/oder der Messelektronik (65) mit Betriebsspannung durch eine ortsfest angeordnete Spannungsversorgungseinheit (31),
c) Übermitteln von Informationen über das von der Vorrichtung (10) übertragene Drehmoment und/oder von Informationen über die Drehzahl der Vorrichtung und/oder anderer, auf einen Zustand der Vorrichtung (10) bezogener und von der Einrichtung (21) erfasster Parameter oder Messwerte von dem Kommunikationsmodul (32) an ein Gegenkommunikationsmodul (74), z.B. an ein mobiles Endgerät, wie Smartphone.

15. Vorrichtung (10) zur Übertragung von Drehmomenten unter Zwischenschaltung gummielastischer Elemente (25a, 25b, 25c) von einem Antrieb (11), z. B. von einem Motor (12), zu einem Abtrieb (13), z. B. zu einer Abtriebswelle (14), umfassend einen antriebsseitigen Befestigungsbereich (15) und einen abtriebsseitigen Befestigungsbereich (16), wobei zwischen dem antriebsseitigen Befestigungsbereich (15) und dem abtriebsseitigen Befestigungsbereich (16) von einer mitdrehenden Batterie mit Betriebsspannung versorgte, mit den Befestigungsbereichen (15, 16) mitrotierende Einrichtung (21) zur Messung des übertragenen Drehmomentes und/oder zur Bestimmung der Drehzahl der Vorrichtung (10) oder eine von einer mitdrehenden Batterie mit Betriebsspannung versorgte, mit den Befestigungsbereichen (15, 16) mitrotierende Messelektronik (65) als Bestandteil der Einrichtung (21) angeordnet ist, wobei die Einrichtung (21) ein Kommunikationsmodul (32) umfasst, das zur Übermittlung von Informationen über das übertragene Drehmoment und/oder von Informationen über die Drehzahl der Vorrichtung und/oder anderer, auf einen Zustand der Vorrichtung (10) bezogener und von der Einrichtung (21) erfasster Parameter oder Messwerte an ein Gegenkommunikationsmodul (74) ausgebildet ist.

## Claims

1. Apparatus (10) for transferring torques with the interposition of rubber-elastic elements (25a, 25b, 25c) from a drive (11), e.g. a motor (12), to an output (13), e.g. to an output shaft (14), comprising a drive-side fastening region (15) and an output-side fastening region (16), wherein, between the drive-side fastening region (15) and the output-side fastening region (16), a device (21), inductively supplied with operating voltage by a stationary voltage supply unit (31), co-rotating with the fastening regions (15, 16), for measuring the transferred torque and/or for determining the rotational speed of the apparatus (10), is arranged or measurement electronics (65) as a component of the device (21), inductively supplied with operating voltage by a stationary voltage supply unit (31), co-rotating with the fastening regions for determining the rotational speed of the apparatus (10) is arranged, wherein the device (21) comprises a communication module (32) which is designed to transmit information about the transferred torque and/or information about the rotational speed of the apparatus and/or another parameter or measured values, related to a state of the apparatus (10) and recorded by the device (21), to a counter communication module (74).

2. Apparatus according to claim 1, **characterised in that** the communication module (32) is designed to provide a radio signal connection according to the Bluetooth protocol.

3. Apparatus according to claim 1 or 2, **characterised in that** the communication module (32) is designed to provide a radio signal connection according to the Bluetooth LE (low-energy) protocol.

4. Apparatus according to one of the preceding claims, **characterised in that** the device (21) comprises a co-rotating display element (30), with which information about the transferred torque and/or information about the rotational speed of the apparatus and/or another parameter or measured values, related to a state of the apparatus (10) and recorded by the device (21), can be displayed.

5. Apparatus according to one of the preceding claims, **characterised in that** control of the display element (30) takes place taking into account the rotational speed of the apparatus (10), in such a way that the display element (30) displays a static, non-co-rotating, image (63).

6. Apparatus (10) according to claim 2 and claim 4 or 5, **characterised in that** the display element (30) is designed in the form of a stroboscope display and/or the display element (30) can be configured via a radio signal connection.

7. Apparatus (10) according to claim 4 or 5, **characterised in that** the device (21) has a control (64) for controlling the display element (30).

8. Apparatus according to one of claims 4 to 6, **characterised in that** the device (21) comprises measurement electronics (65), with which a rotational speed of the apparatus (10) can be measured.

9. Apparatus according to one of the preceding claims, **characterised in that** the device (21) comprises at least one co-rotating receiver (66a, 66b) or a co-rotating transmitter and the stationary arranged voltage supply unit (31) comprises at least one transmitter (67) or receiver, in particular for determining or for generating a rotational position signal and/or for generating a trigger signal.

10. Apparatus according to claim 9, **characterised in that** the transmitter (67) and the receiver (66a, 66b) form a signal path (68) between them, e.g. a visual signal path or an electrical signal path or a magnetic signal path or an electro-magnetic signal path.

11. Apparatus according to claim 9 or 10, **characterised in that** at least one rotational position of the apparatus (10) can be detected or checked or triggered by means of the transmitter (67) and the receiver (66a).

12. Apparatus according to one of claims 9 to 11, **characterised in that** at least two transmitters or at least two receivers (66a, 66b) are provided.

13. Apparatus according to claim 12, **characterised in that** a direction of rotation (69) of the apparatus can be detected by means of the at least two transmitters or by means of the at least two receivers.

14. Method for operating an apparatus (10) according to one of claims 1 to 13, for transferring torques with the interposition of rubber-elastic elements (25a, 25b, 25c) from a drive (11), e.g. a motor (12), to an output (13), e.g. to an output shaft (14), comprising the following steps:
a. providing an apparatus (10) comprising a drive-side fastening region (15) and an output-side fastening region (16), wherein, between the drive-side fastening region (15) and the output-side fastening region (16), a device (21), co-rotating with the fastening regions (15, 16), for measuring the transferred torque and/or for determining the rotational speed of the apparatus (10) is arranged or measurement electronics (65) of a device (21), inductively supplied with operating voltage by a stationary voltage supply unit (31), co-rotating with the fastening regions (15, 16) for determining the rotational speed of the apparatus (10) is arranged, wherein the device (21) comprises a communication module (32),
b. supplying the device (21) and/or the measurement electronics (65) with operating voltage by a stationary voltage supply unit (31),
c. transmitting information about the torque transferred from the apparatus (10) and/or information about the rotational speed of the apparatus and/or another parameter or measured values, related to a state of the apparatus (10) and recorded by the device (21) from the communication module (32) to a counter communication module (74), e.g. to a mobile end device, such as a smartphone.

15. Apparatus (10) for transferring torques with the interposition of rubber-elastic elements (25a, 25b, 25c) from a drive (11), e.g. a motor (12), to an output (13), e.g. to an output shaft (14), comprising a drive-side fastening region (15) and an output-side fastening region (16), wherein, between the drive-side fastening region (15) and the output-side fastening region (16), a device (21), supplied with operating voltage by a co-rotating battery, co-rotating with the fastening regions (15, 16), for measuring the transferred torque and/or for determining the rotational speed of the apparatus (10), is arranged or measurement electronics (65) as a component of the device (21), supplied with operating voltage by a co-rotating battery, co-rotating with the fastening regions (15, 16) is arranged, wherein the device (21) comprises a communication module (32) which is designed to transmit information about the transferred torque and/or information about the rotational speed of the apparatus and/or another parameter or measured value, related to a state of the apparatus (10) and recorded by the device (21), to a counter communication module (74).

## Revendications

1. Dispositif (10) destiné à transmettre des couples en interposant des éléments élastiques en caoutchouc (25a, 25b, 25c) depuis un actionneur (11), par exemple depuis un moteur (12), jusqu'à une sortie (13), par exemple jusqu'à un arbre de sortie (14), comprenant une zone de fixation côté actionneur (15) et une zone de fixation côté sortie (16), dans lequel, entre la zone de fixation côté actionneur (15) et la zone de fixation côté sortie (16), est disposé un moyen (21), qui est alimenté en tension de fonctionnement de manière inductive par une unité d'alimentation en tension (31) disposée de manière fixe et qui tourne conjointement avec les zones de fixation (15, 16), pour mesurer le couple transmis et/ou pour déterminer la vitesse de rotation du dispositif (10) ou bien est disposé un système électronique de mesure (65), en tant que composant du moyen (21), qui est alimenté en tension de fonctionnement de manière inductive par une unité d'alimentation en tension (31) disposée de manière fixe et qui tourne conjointement avec les zones de fixation (15, 16), dans lequel le moyen (21) comprend un module de communication (32) qui est conçu pour transmettre à un contre-module de communication (74) des informations sur le couple transmis et/ou des informations sur la vitesse de rotation du dispositif et/ou d'autres paramètres ou valeurs de mesure concernant un état du dispositif (10) et enregistré(e)s par le moyen (21).

2. Dispositif selon la revendication 1, **caractérisé en ce que** le module de communication (32) est conçu pour fournir une connexion de signal radio selon le protocole Bluetooth.

3. Dispositif selon la revendication 1 ou 2, **caractérisé en ce que** le module de communication (32) est conçu pour fournir une connexion de signal radio selon le protocole Bluetooth LE (*low energy*).

4. Dispositif selon une des revendications précédentes, **caractérisé en ce que** le moyen (21) comprend un élément d'affichage rotatif conjointement (30) qui permet d'afficher des informations sur le couple transmis et/ou des informations sur la vitesse de rotation du dispositif et/ou d'autres paramètres ou valeurs de mesure concernant un état du dispositif (10) et enregistré(e)s par le moyen (21).

5. Dispositif selon une des revendications précédentes, **caractérisé en ce qu'**un actionnement de l'élément d'affichage (30) se fait en prenant en compte la vitesse de rotation du dispositif (10) de telle sorte que l'élément d'affichage (30) affiche une image fixe et non rotative (63).

6. Dispositif (10) selon la revendication 2 et la revendication 4 ou 5, **caractérisé en ce que** l'élément d'affichage (30) est conçu à la manière d'un affichage stroboscopique et/ou **en ce que** l'élément d'affichage (30) peut être configuré par une connexion de signal radio.

7. Dispositif (10) selon la revendication 4 ou 5, **caractérisé en ce que** le moyen (21) présente une commande (64) pour actionner l'élément d'affichage (30).

8. Dispositif selon une des revendications 4 à 6, **caractérisé en ce que** le moyen (21) comprend un système électronique de mesure (65) qui permet de mesurer une vitesse de rotation du dispositif (10).

9. Dispositif selon une des revendications précédentes, **caractérisé en ce que** le moyen (21) comprend au moins un récepteur (66a, 66b) rotatif conjointement ou un émetteur rotatif conjointement et l'unité d'alimentation en tension (31) disposée de manière fixe (31) comprend au moins un émetteur (67) ou récepteur, en particulier pour émettre ou pour générer un signal de position de rotation et/ou pour générer un signal de déclenchement.

10. Dispositif selon la revendication 9, **caractérisé en ce que** l'émetteur (67) et le récepteur (66a, 66b) forment entre eux des chemins de signaux (68), par exemple un chemin de signal optique ou un chemin de signal électrique ou un chemin de signal magnétique ou un chemin de signal électromagnétique.

11. Dispositif selon la revendication 9 ou 10, **caractérisé en ce que**, à l'aide de l'émetteur (67) et du récepteur (66a), au moins une position de rotation du dispositif (10) peut être déterminée, ou vérifiée, ou déclenchée.

12. Dispositif selon une des revendications 9 à 11, **caractérisé en ce qu'**au moins deux émetteurs ou au moins deux récepteurs (66a, 66b) sont prévus.

13. Dispositif selon la revendication 12, **caractérisé en ce que**, à l'aide des au moins deux émetteurs ou à l'aide des au moins deux récepteurs un sens de rotation (69) du dispositif peut être déterminé.

14. Procédé destiné à faire fonctionner un dispositif (10) selon une des revendications 1 à 13, pour transmettre des couples en interposant des éléments élastiques en caoutchouc (25a, 25b, 25c) depuis un actionneur (11), par exemple depuis un moteur (12), jusqu'à une sortie (13), par exemple jusqu'à un arbre de sortie (14),
comprenant les étapes suivantes :
a) fournir un dispositif (10) comprenant une zone de fixation côté entraînement (15) et une zone de fixation côté sortie (16) dans lequel, entre la zone de fixation côté entraînement (15) et la zone de fixation côté sortie (16), est disposé un moyen (21) tournant conjointement avec les zones de fixation (15, 16) pour mesurer le couple transmis et/ou pour déterminer la vitesse de rotation du dispositif (10) ou bien est disposé un système électronique de mesure (65) d'un moyen (21), qui est alimenté en tension de fonctionnement de manière inductive par une unité d'alimentation en tension (31) disposée de manière fixe et qui tourne conjointement avec les zones de fixation (15, 16), pour déterminer la vitesse de rotation du dispositif (10), dans lequel le moyen (21) comprend un module de communication (32),
b) alimenter le moyen (21) et/ou le système électronique de mesure (65) en tension de fonctionnement par une unité d'alimentation en tension (31) disposée de manière fixe,
c) transmettre à un contre-module de communication (74), par exemple à un terminal mobile tel qu'un téléphone intelligent (smartphone), des informations sur le couple transmis par le dispositif (10) et/ou des informations sur la vitesse de rotation du dispositif et/ou d'autres paramètres ou valeurs de mesure concernant un état du dispositif (10) et enregistré(e)s par le moyen (21).

15. Dispositif (10) destiné à transmettre des couples en interposant des éléments élastiques en caoutchouc (25a, 25b, 25c) depuis un actionneur (11), par exemple depuis un moteur (12), jusqu'à une sortie (13), par exemple jusqu'à un arbre de sortie (14), comprenant une zone de fixation côté entraînement (15) et une zone de fixation côté sortie (16), dans lequel, entre la zone de fixation côté entraînement (15) et la zone de fixation côté sortie (16), est disposé un moyen (21), qui est alimenté en tension de fonctionnement par une batterie tournant conjointement et qui tourne conjointement avec les zones de fixation (15, 16) pour mesurer le couple transmis et/ou pour déterminer la vitesse de rotation du dispositif (10) ou bien est disposé un système électronique de mesure (65), en tant que composant du moyen (21), qui est alimenté en tension de fonctionnement par une batterie tournant conjointement et qui tourne conjointement avec les zones de fixation (15, 16), dans lequel le moyen (21) comprend un module de communication (32) qui est conçu pour transmettre à un contre-module de communication (74) des informations sur le couple transmis et/ou des informations sur la vitesse de rotation du dispositif et/ou d'autres paramètres ou valeurs de mesure concernant un état du dispositif (10) et enregistré(e)s par le moyen (21).
